# EUROPÄISCHE PATENTSCHRIFT

(11) **EP 1 132 003 B1**
(45) Veröffentlichungstag und Bekanntmachung des Hinweises auf die Patenterteilung: **20.08.2003**
(21) Anmeldenummer: 01104639.8
(22) Anmeldetag: 23.02.2001
(51) Int. Cl.: A21C 9/08

(54) **Herstellung gebogener Teigwickel für Croissants**
Manufacturing bent rolled-up dough pieces for crescent rolls
Production de morceaux de pâte enroulés pliés pour croissants

(30) Priorität: 23.02.2000 DE 10008391; 13.07.2000 DE 10034177
(43) Veröffentlichungstag der Anmeldung: 12.09.2001
(73) Patentinhaber: A. FRITSCH GMBH & CO. KG, D-97348 Markt Einersheim (DE)
(72) Erfinder: Bernhardt, Udo, 97346 Iphofen (DE); Trost, Ernst, 97348 Markt Einersheim (DE)
(74) Vertreter: Götz, Georg

(56) Entgegenhaltungen:
- EP-A- 0 571 089
- DE-A- 3 216 493
- DE-A- 3 743 319
- US-A- 5 440 974

## Beschreibung

Die Erfindung betrifft ein Verfahren und eine Vorrichtung zur maschinellen Herstellung ring- oder U-artig gebogener Teigwickel für Croissants aus in sich rundlich gewickelten Teiglingen mit geradliniger Wickel- bzw. Längsachse.

Bei einer bekannten Vorrichtung zum maschinellen Biegen von Teigstücken (DE 40 39 793 C2) werden zwei Biegearme verwendet, mittels welcher der Teigling um einen Dorn herum gekrümmt wird. Die Biegearme sind zueinander verschwenkbar angeordnet, und wenigstens ein Biegearm ist mit einem Hubelement zum Verstellen eines Endes des Teigstücks abweichend von der Schwenkebene des anderen Biegearms versehen.

Ferner ist eine Teig-Biegeanlage bekannt (IT-PS 1 045 079), bei der ein Förderband einer Biegestation längliche Teigstücke zuführt. Die Biegestation bildet einen sich in Förderrichtung zunehmend verengenden Durchgangskanal, der von angetriebenen Rollen beidseitig begrenzt ist. Indem die Drehgeschwindigkeit dieser Rollen höher als die Fördergeschwindigkeit des Förderbandes ist, werden die an den Rollen anstoßenden Teigstückenden schneller transportiert als der mittlere Teigstückabschnitt, so dass in Verbindung mit der zunehmenden Kanalverengung eine Biegung in Förderrichtung stattfindet.

In ähnlicher Weise wird nach US-A-5 440 974 für gewickelte Teiglinge ein Biegekanal mit stromabwärts konvergierenden Biegebändern gebildet, die zueinander und voneinander verschwenkt werden können.

Aus DE-A-32 16 493 ist eine Maschine zur Herstellung von Hörnchen bekannt, bei der zum Biegen der in sich gewickelten Ausgangsteigstücke Bürstenpaare verwendet werden. Danach werden die gebogenen Teigwickel zum Formerhalt in ein Blech mit Ausnehmungen gegeben.

Dem gegenüber liegt der Erfindung die Aufgabe zugrunde, mit einer vereinfachten Gerätetechnik eine schonende, streßfreie und dauerhafte Teigbiegung bei hoher Betriebszuverlässigkeit herbeizuführen.

Zur Lösung wird das im Patentanspruch 1 angegebene Verfahren und die im Patentanspruch 12 angegebene Vorrichtung vorgeschlagen. Weitere Ausgestaltungen ergeben sich aus den abhängigen Ansprüchen.

Die Leichtigkeit und Dauerhaftigkeit der Biegung wird gemäß Erfindung dadurch gefördert bzw. begünstigt, dass der Teigling vor seiner Biegung auf seinem Umfangsmantel bzw. Oberfläche mit einer oder mehreren Biegenuten versehen wird, die in Umfangsrichtung um die Wickelachse verlaufen. Die Nuten bzw. Eindrücke in die Oberfläche dienen gleichsam als Gelenk-, Sollknick- oder Falzstellen. Ohne diese Eindrücke, Knickstellen oder Nuten würden die gebogenen Teigwickel das Bestreben haben, aufgrund ihrer innewohnenden Elastizität wieder eine geradlinige Gestalt einzunehmen. Durch diese werden Spannungen im Teigling nach dem Wickeln und vor dem Biegen reduziert. Zweckmäßig ist es dabei, die Biegenuten an den besonders beanspruchten Stellen des Teiglings auszubilden, nämlich an den "Gelenkstellen", wo die umzubiegenden Endabschnitte beginnen, und im mittleren Bereich, wo bei Biegung ebenfalls eine hohe Oberflächenspannung auftritt.

Ferner wird nach einer Weiterbildung der Erfindung bei dem Verfahren mit den eingangs genannten Merkmalen, wobei beide Endabschnitte des Teiglings aufeinander zugebogen werden, vorgeschlagen, dass zum Biegen die beiden Endabschnitte jeweils mit einer maschinell bewegten Biege-Bürste in Eingriff oder Berührung gebracht und von dieser in Richtung zum jeweils anderen Endabschnitt bewegt, insbesondere geschleudert werden. Es werden also die Borsten der Biege-Bürste zum Erfassen der Teigling-Endabschnitte und zu deren Aufeinanderzubewegen verwendet. Insbesondere wenn gemäß einer besonderen Ausbildung der Erfindung die Borsten aus elastischem Material, insbesondere Kunststoff, hergestellt sind, kann so der Biegevorgang sehr schonend und weitgehend ohne drastische Beschädigung der Teiglingsoberfläche erfolgen.

Vielfach werden in der Croissants-Herstellung Teiglinge mit ovalem bzw. ellipsenartigem Querschnitt gewickelt. In diesem Zusammenhang besteht eine besonders vorteilhafte Ausbildung der Erfindung darin, dass ein solcher gewickelter Teigling vor seiner Biegung um seine Längskörper- bzw. Wickelachse so gedreht wird, dass der stärker beziehungsweise enger gekrümmte Mantelabschnitt (durchsetzt von der längeren der beiden Quer-Ellipsenachsen, die jeweils quer zur Längs- oder Wickelachse verlaufen) von durch Biegen erzeugte Oberflächenspannungen am wenigsten beeinträchtigt wird. Dies ist dann der Fall, wenn der Teiglings-Oberflächenabschnitt mit der geringsten Krümmung durch den Biegevorgang konkav gewölbt wird.

Im Rahmen der Erfindung werden mittels der Biege-Bürsten bzw. deren Borsten die Enden des gewickelten Teiglings nach vorne befördert oder geschleudert. Insbesondere bei Rotationsbürsten ist es zweckmäßig, wenn die Drehgeschwindigkeit oder sonstige Bahngeschwindigkeit der Borsten mindestens das Zweifache der Transportgeschwindigkeit eines Förderbandes oder einer sonstigen Transporteinrichtung beträgt. In Förderrichtung besteht also zwischen dem Förderband und der Geschwindigkeit der Bürsten eine Differenz bzw. Relativgeschwindigkeit. Zweckmäßig ist es, wenn im Falle von Rotationsbürsten die Drehgeschwindigkeit extern mit Hand einstellbar ist. Ein Geschwindigkeitsverhältnis zwischen Bürste und Fördergeschwindigkeit von 2-3 vorzugsweise 2,5, hat sich in der Praxis bewährt.

Im Rahmen der Erfindungsalternative der Verwendung bürstenartiger Werkzeuge zum Biegen gewickelter Teiglinge wird zur Lösung der eingangs genannten Erfindungsaufgabe bei einer Vorrichtung mit den eingangs genannten Merkmalen, welche eine die Teiglinge in eine Förderrichtung befördernde Transporteinrichtung, insbesondere Förderband, und eine oder mehrere, je einem der beiden Endabschnitte des Teiglings zugeordnete Biegemittel aufweist, vorgeschlagen, dass das oder die Biegemittel mit maschinell angetriebenen Biege-Bürsten realisiert sind, die mit ihren Borsten für den Eingriff mit den Endabschnitten des von der Transporteinrichtung zugeführten Teiglings angeordnet sind. Mittels eines Antriebs werden die Biege-Bürsten in Bewegung versetzt und dabei in Eingriff bzw. Berührung mit den Teiglingsenden zu deren Biegung nach innen gebracht. Damit läßt sich der Biegevorgang zur Erzeugung U-förmiger Teigwickel schonend herbeiführen. Eine besonders vorteilhafte Ausbildung für die Biege-Bürsten besteht in der Form radartiger, drehangetriebener Rotationsbürsten, deren Drehachsen schräg oder senkrecht zur Förderrichtung verlaufen. Bei einem Schrägverlauf bilden die rotierenden Biege-Bürsten einen sich in Förderrichtung verengenden, konvergierenden Biegekanal für die Teiglingsenden.

Zur Ausbildung der oben angesprochenen Biegenuten ist nach einer besonderen Ausbildung der Erfindung eine Nut-Prägeeinrichtung vorgesehen bzw. angeordnet. Diese kann zweckmäßig als Präge-Durchgangskanal für den Teigling ausgebildet sein. Realisieren läßt sich die Nut-Prägeeinrichtung durch ein oder mehrere, in Transportrichtung drehbare Rillräder, die im Abstand von der Auflage der Transporteinrichtung angeordnet sind und so einen Prägedurchgang bilden. Antransportierte Teiglinge kommen mit den sich drehenden Rillrädern in Berührung und erhalten so zumindest auf einem Teilabschnitt ihres um die Wickelachse verlaufenden Umfangs Nuten oder Rillen eingeprägt. Gleichzeitig können die Rillräder dazu verwendet werden, dem gewickelten Teigling die oben angesprochene Drehung um seine Wickelachse zu erteilen, so dass der stärker gekrümmte Umfangsmantelabschnitt des Teiglings in eine Richtung senkrecht zur Biegeebene weist.

Nach einer weiteren Ausbildung der Erfindung ist eine Führungseinrichtung der Transporteinrichtung gegenüberliegend angeordnet, so dass ein die Teiglinge an Ober- und Unterseite führender und begrenzender Durchgang in Förderrichtung ausgebildet ist. Dieser läßt sich insbesondere zum Verhindern eines Hochschleuderns der Teiglingsenden durch die Biege-Bürsten vorteilhaft einsetzen. Eine konstruktive, zweckmäßige Realisierung dieser ersten Führungseinrichtung läßt sich mittels in Transportrichtung angetriebenen Endlos-Führungsriemen bewerkstelligen, die voneinander derart beabstandet sind, dass sie den zu biegenden Endabschnitten des Teiglings zugeordnet sind. Diese Endabschnitte sind besonders dem Hochschleudern durch Biege-Bürsten ausgesetzt.

Eine weitere vorteilhafte Ausbildung besteht darin, dass die Führungsriemen sich in den Bewegungsbereich der Borsten der Biegebürsten erstrecken. Dann können die Borsten (neben den davon erfaßten Teiglings-Endabschnitten) am jeweiligen Führungsriemen anschlagen, abstreifen und sich so von Teigresten säubern. Umgekehrt werden auch die Führungsriemen von den Borsten der Biege-Bürste gereinigt. Biege-Bürsten und Führungsriemen putzen sich gemäß dieser Erfindungsausbildung also gegenseitig. Neben dieser Putzfunktion kommt den Führungsriemen die bereits angesprochene Funktion zu, die Schenkel der U-förmig gebogenen Teigwickel zu halten und zu führen.

Diese soeben genannte Funktion sollte zweckmäßig nicht nur an Ober- und Unterseite der Teigwickel, sondern auch an den Seitenflanken der U-Schenkel der Teigwickel durchgeführt werden. Zu diesem Zweck ist nach einer Erfindungsausbildung eine zweite Führungseinrichtung vorgesehen, die den Biege-Bürsten nachgeordnet und zur Bildung eines Seiten-Durchgangs angeordnet und ausgebildet ist, der die Teiglinge an ihren U-förmig umgebogenen End- bzw. Schenkelabschnitten führt und begrenzt. Eine zweckmäßige Ausbildung dieser zweiten Führungseinrichtung besteht in an einer Auflagefläche der Transporteinrichtung hochstehenden, einander gegenüberliegenden Seitenführungsbändern. Diese sind zweckmäßig in Transportrichtung angetrieben und dienen der Anlage der Außenseiten der umgebogenen End- bzw. Schenkelabschnitte der Teigwickel.

Weitere Einzelheiten, Vorteile, Merkmale und Wirkungen auf der Basis der Erfindung ergeben sich aus der nachfolgenden Beschreibung bevorzugter Ausführungswege der Erfindung sowie aus den Zeichnungen. Diese zeigen in:
- Figur 1: den erfindungsgemäßen Verfahrensverlauf in schematischer Draufsicht und Seitenansicht,
- Figur 2: ein Beispiel für eine erfindungsgemäße Biegevorrichtung in der Draufsicht,
- Figur 3: eine perspektivische Seitenansicht auf die Biegestation der erfindungsgemäßen Vorrichtung,
- Figur 4: die erfindungsgemäße Vorrichtung gemäß Figuren 2 und 3 in perspektivischer Draufsicht, und
- Figur 5: eine den Ausgang der erfindungsgemäßen Vorrichtung bildende Seiten-Führungseinrichtung.

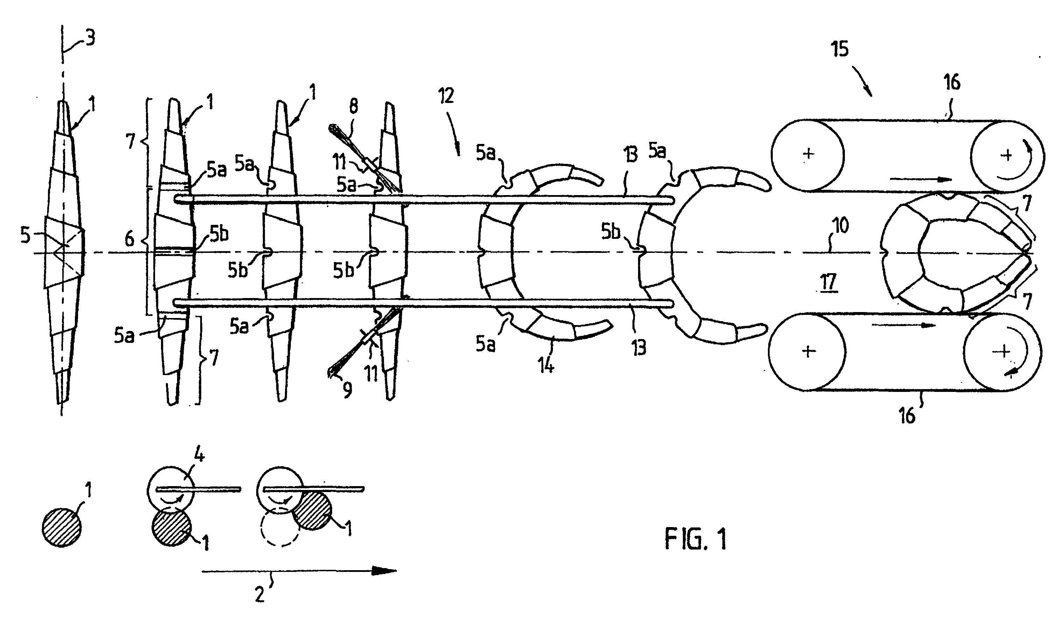

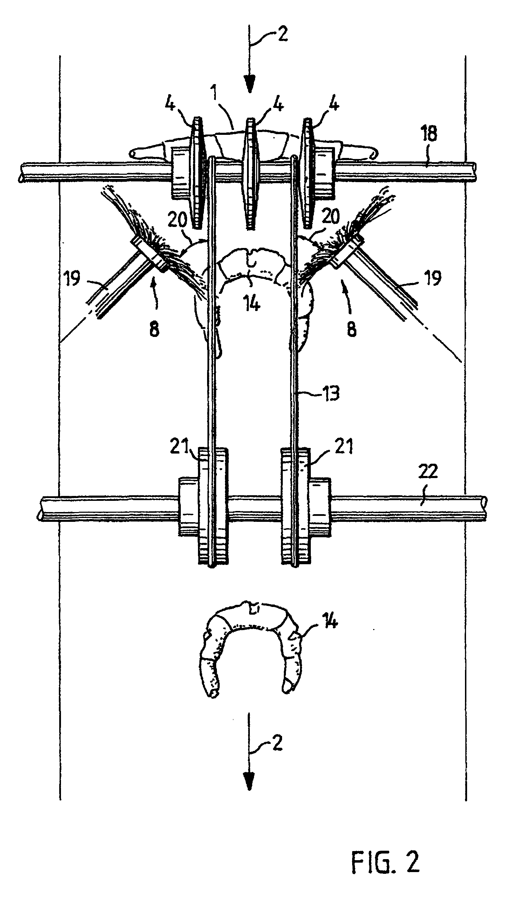

Gemäß Figur 1 wird ein Teigling 1, der aus einem dreieckförmigen Teigstück mit der Spitze 5 in sich rund gewickelt ist, in Förderrichtung 2 angeliefert. Dabei verläuft die Wickelachse 3 des Teiglings 1 quer zur Förderrichtung. Jeweils mittels eines Rillrades 4 werden drei Biegenuten 5a, 5b in einen Abschnitt des Teiglings-Umfangsmantels eingeprägt. Die zwei äußeren Biegenuten 5a grenzen den Mittelabschnitt 6 von den Endabschnitten 7 des Teiglings 1 ab. Entsprechend den Abständen der Biegenuten 5a, 5b voneinander sind die Rillräder 4 auf einer gemeinsamen Achse angeordnet und werden entgegen der Förderrichtung 2 auf dem Teiglings-Umfangsmantel abgerollt, so dass die einzelnen Biegenuten eingeprägt werden. Dabei werden die Teiglinge um ihre Wickelachse 3 so gedreht, dass die Biegenuten sich auf einem Abschnitt des Umfangsmantels befinden, welcher Abschnitt der Förderrichtung 2 entgegengesetzt bzw. abgewandt ist. So können die Biegenuten 5a, 5b Falz- bzw. Gelenkstellen für die nachfolgende Biegung durch die Biege-Rundbürsten 8 bilden. Diese werden mit einer Winkelgeschwindigkeit gedreht, welche für die Borsten 9 eine Umlaufbahn- bzw. Tangenzialgeschwindigkeit an den Teiglingen 1 herbeiführt, deren Betrag ein Vielfaches einer Fördergeschwindigkeit der in Förderrichtung 2 transportierten Teiglinge 1 beträgt. Die Biege-Rundbürsten 8 werden bezüglich der Förderrichtung 2 im gleichen Richtungssinn wie die Rillräder 4 gedreht, so dass die Teiglings-Endabschnitte 7 über die elastischen Borsten 9 in Förderrichtung 2 sowie nach oben geschleudert werden. Ferner wird ihnen eine zur Teigbahn-Mittelachse 10 (die parallel zur Förderrichtung 2 ist) konvergierende Bewegungskomponente erteilt, die auf einer Schrägstellung der Biege-Rundbürsten 8 bzw. ihrer Drehachsen 11 bezüglich der Teigbahn-Mittelachse 10 beruht. Zweckmäßig wird mit dieser Schrägstellung ein spitzer Winkel 20 (s. Fig.2) eingeschlossen. Zudem sind die Biege-Rundbürsten 8 so angeordnet, dass ihr rad- oder reifenartiger Borstenbüschel mit der Stelle auf dem Umfangsmantel des Teiglings 1 in Berührung kommt, in welchen Bereich jeweils die äußere Biegenut 5a, in Richtung entgegen der Förderrichtung 2 weisend, eingeprägt ist. Um das gegenüber der Transportunterlage erfolgende Hochschwenken der Endabschnitte 7 der Teiglinge 1 durch die Biege-Rundbürsten zu begrenzen, ist eine erste Führungseinrichtung 12 vorgesehen, die mit zwei parallel und bezüglich der Teigbahn-Mittelachse 10 symmetrisch verlaufender Führungsriemen 13 realisiert ist. Diese erstrecken sich teilweise oberhalb der Biege-Rundbürsten 8, deren Borsten 9 an den Führungsriemen 13 abstreifen können. Dadurch kommt es zu einem gegenseitigen Reinigungseffekt für die Borsten 9 und die Führungsriemen 13. An diese können die hochgeschleuderten und in Förderrichtung 2 umgebogenen Teiglings-Endabschnitte 7 anschlagen. Im weiteren Verlauf entsteht dann ein etwa U-artig gebogener Teigwickel 14, bei dem sich die Biegenuten 5a, 5b durch den Biegevorgang und zum Ausgleich von Oberflächen- bzw. Außenhautspannungen aufgeweitet haben. Im Anschluß an die erste Führungseinrichtung 12 ist eine zweite Führungseinrichtung 15 aufgestellt, die aus zwei Seiten-Führungsbändern 16 besteht, die symmetrisch zur Teigbahn-Mittelachse 10 angeordnet sind und parallel zur beziehungsweise in Förderrichtung 2 angetrieben werden. Dadurch wird ein Seiten-Führungsdurchgang 17 gebildet, in dem eine Nachformung der von den Rund-Biegebürsten 8 erzeugten U-Form stattfindet, indem die Endabschnitte 7 nunmehr beim U-artigen Teigwickel 14 weiter aufeinander zugedrückt werden. Dabei kann eine geschlossene Ringform entstehen. In jedem Fall dienen die Bänder 16 zum Stabilisieren der gebogenen Form, da der Teigwickel während des Durchgangs durch den von den Bändern 16 definierten Formkanal Teigspannungen abbauen kann. Die Breite des Seiten-Führungsdurchgangs 17 ist dementsprechend bemessen.

Gemäß Figur 2 besteht die zur Realisierung des Verfahrens gemäß Figur 1 notwendige Gerätetechnik in folgenden Funktionskomponenten: Auf einer gemeinsamen quer zur Förderrichtung 2 verlaufenden Antriebswelle 18 sind wie beschrieben die drei Rillräder 4 zu ihrer Rotation angeordnet. Die Biege-Rundbürsten 8 werden ebenfalls von je einer schräg verlaufenden Drehwelle 19 angetrieben, und ihre Rotationsebenen bilden mit den Führungsriemen 13 einen spitzen Winkel 20. Die Führungsriemen 13 sind als Endlosriemen ausgebildet und umlaufen einerseits die gemeinsame Antriebswelle 18 direkt an den Innenseiten der beiden äußeren Rillräder 4 und andererseits parallele Antriebsscheiben 20, die auf einer quer zur Förderrichtung 2 verlaufenden Antriebswelle 21 sitzend von einer Antriebseinrichtung in Drehung versetzt werden. Ferner ist erkennbar, dass die Teiglinge 1 bzw. Teigwickel 14 auf der Auflagefläche eines Förderbandes 23 in Förderrichtung 2 transportiert werden.

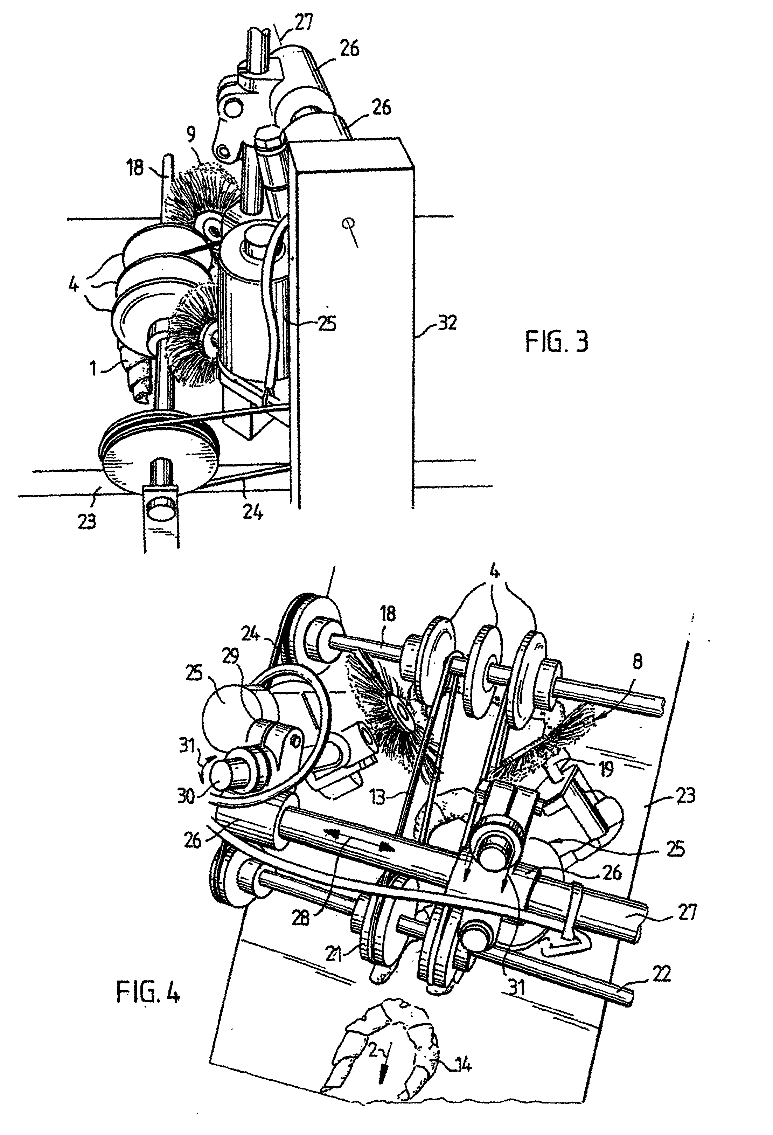

Gemäß Figur 3 und 4 sind die Antriebswellen 18, 22 der Rillräder 4 bzw. der Antriebsscheiben 21 über einen gemeinsamen Riementrieb 24 zur Ausführung einander entsprechender Drehgeschwindigkeiten miteinander gekoppelt. Die Biege-Rundbürsten 8 sind mit je einer Antriebseinheit 25 verbunden und von dieser getragen, die über Schiebeelemente 26 auf einem quer zur Förderrichtung 2 verlaufenden Tragjoch 27 in dessen Längsrichtung hin und her verschiebbar angebracht sind. Durch entsprechende Quer-Schiebebewegungen 28 läßt sich die Nähe der Biege-Rundbürsten 8 zu den Führungsriemen 13 einstellen. Die Schiebeelemente 26 sind mit entgegen zur Förderrichtung 2 vorspringenden Haltehülsen 29 versehen, in welchen mit der jeweiligen Antriebseinheit 25 der Biege-Rundbürste 8 verbundene Tragbolzen 30 gleitend drehbar und vertikal verschiebbar eingesteckt sind. Durch die entsprechende Drehung 31 läßt sich der oben angesprochene Winkel 20 zwischen der Drehebene der Biege-Rundbürsten 8 und den Führungsriemen 13 einstellen. Gemäß Figur 3 ist das Tragjoch 27 mit den darauf beweglichen und feststellbaren Schiebehülsen 26 von einem hochstehenden Tragchassis 32 oberhalb des Förderbandes 23 und der Führungsriemen 13 getragen.

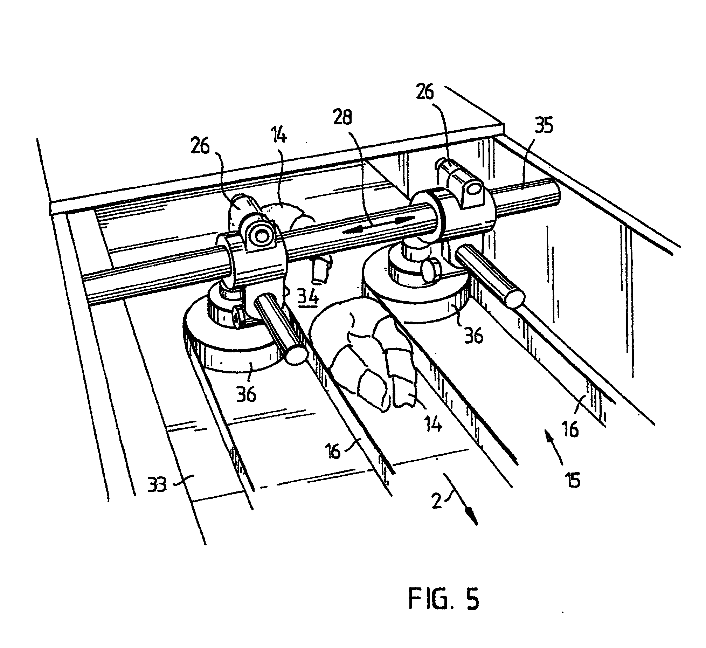

Die gerätetechnische Realisierung der zweiten Führungseinrichtung 15 mit Seiten-Führungsbändern 16 ist in Figur 5 veranschaulicht: Vorzugsweise auf einem zweiten Förderband 33, welches dem ersten, den Biege-Rundbürsten 8 zugeordneten Förderband 23 nachgeordnet ist, werden die U-artigen Teigwickel 14 dem Eingang 34 der zweiten Führungseinrichtung 15 zugeführt. Auf einem quer zur Förderrichtung 2 verlaufenden, zweiten Tragjoch 35 sind weitere Schiebeelemente 26 angebracht. An ihrer Unterseite halten sie jeweilige Förderband-Antriebsscheiben 36, welche die Seiten-Führungsbänder 16 in Förderrichtung 2 bewegen. Diese stehen mit ihrer Schmalseite senkrecht auf dem Förderband 33 auf und bilden Seitenführungen und -begrenzung für die Außenflanken bzw. Außenseiten der U-Schenkel des Teigwickels 14. Für diese ist so ein Seitenführungskanal gebildet, dessen Breite durch Querverschiebungen 28 der Schiebeelemente 26 mit den Förderband-Antriebsscheiben 36 auf dem zweiten Quer-Tragjoch 35 einstellbar ist.

### Bezugszeichenliste

- 1: Teigling
- 2: Förderrichtung
- 3: Wickelachse
- 4: Rillrad
- 5: Spitze
- 5a: äußere Biegenut
- 5b: innere Biegenut
- 6: Mittelabschnitt
- 7: Endabschnitt
- 8: Rundbürste
- 9: Borsten
- 10: Teigbahn-Mittelachse
- 11: Drehachse
- 12: erste Führungseinrichtung
- 13: Führungsriemen
- 14: Teigwickel
- 15: zweite Führungseinrichtung
- 16: Seitenführungsband
- 17: Seitenführungsdurchgang
- 18: Antriebswelle
- 19: Drehwelle
- 20: spitzer Winkel
- 21: Antriebsscheiben
- 22: Antriebswelle
- 23: Förderband
- 24: Riementrieb
- 25: Antriebseinheit
- 26: Schiebeelement
- 27: Tragjoch
- 28: Querschiebebewegung
- 29: Haltehülse
- 30: Tragbolzen
- 31: Drehbewegung
- 32: Traggestell
- 33: Förderband
- 34: Eingang
- 35: zweites Tragjoch
- 36: Förderband-Antriebsscheiben

## Patentansprüche

1. Verfahren zur maschinellen Herstellung eines ring- oder U-artig gebogenen Teigwickels (14) für Croissants aus einem in sich rundlich gewickelten Teigling (1) mit geradliniger Wickel- beziehungsweise Längsachse (3), indem beide Endabschnitte (7) des Teiglings (1) aufeinander zu gebogen werden, wobei vor seiner Biegung der Teigling (1) auf seinem Umfangsmantel oder einem Teil davon mit einer oder mehreren, in seiner Umfangsrichtung verlaufenden Knick- und/oder Biegenuten (5a,5b) und/oder -rillen versehen wird, **dadurch gekennzeichnet, dass** vor der Biegung des Teiglings (1) nur auf einem Teilabschnitt seines Mantelumfangs die eine oder mehreren Biegenuten (5a,5b) ausgebildet werden, und dann der Teigling (1) derart um seine Wickelachse (3) verdreht wird, dass die Längsöffnungen der Biegenuten in eine Richtung weisen, die der Aufeinanderzubewegung der Endabschnitte (7) und/oder einer Teiglingsförderrichtung (3) abgewandt beziehungsweise entgegengesetzt ist.

2. Verfahren nach Anspruch 1, **dadurch gekennzeichnet, dass** zum Biegen die beiden Endabschnitte (7) jeweils mit einer maschinell bewegten Biege-Bürste (8) in Eingriff gebracht und von dieser in Richtung zum jeweils anderen Endabschnitt (7) hin bewegt werden.

3. Verfahren nach Anspruch 1 oder 2, **dadurch gekennzeichnet, dass** der Teigling um 90 Grad um seine Wickelachse (3) verdreht wird.

4. Verfahren nach einem der vorangehenden Ansprüche, **dadurch gekennzeichnet, dass** die Biegenuten (5a,5b) in einem mittleren Längsabschnitt des Teiglings (1) und/oder in einem den Biegebürsten (8) zugeordneten Endbereich des Teiglings (1) ausgebildet werden.

5. Verfahren nach einem der vorangehenden Ansprüche, wobei mit einem ovalen beziehungsweise ellipsenartigen Querschnitt gewickelte Teiglinge (1) verwendet werden, wobei der Querschnitt senkrecht zur Längsund/oder Wickelachse des Teiglings (1) verläuft, **dadurch gekennzeichnet, dass** der Teigling (1) vor seiner Biegung derart, vorzugsweise um 90 Grad, um seine Längs- oder Wickelachse (3) verdreht wird, dass die längere der beiden Ellipsenachsen quer zu einer Biege-Ebene verläuft, die im Zuge der Biegung von den beiden Endabschnitten (7) aufgespannt wird.

6. Verfahren nach Anspruch 3 und 5, **dadurch gekennzeichnet, dass** die Biegenuten (5a,5b) in dem Bogenabschnitt des Teiglings-Mantelumfangs ausgebildet werden, welcher Bogenabschnitt von der längeren der beiden Ellipsenachsen etwa mittig durchsetzt wird.

7. Verfahren nach einem der vorangehenden Ansprüche, wobei die gewickelten Teiglinge (1) während ihrer Biegung auf einem Förderband (23) transportiert werden, **dadurch gekennzeichnet, dass** den Borsten (9) der Biegebürste(n) (8) eine Bahngeschwindigkeit erteilt wird, die mindestens das zweifache der Transportgeschwindigkeit des Förderbandes (23) beträgt.

8. Verfahren nach einem der vorangehenden Ansprüche, **dadurch gekennzeichnet, dass** nach dem Biegen von außen an je einem der beiden U-Schenkel beziehungsweise Endabschnitte (7) Haltemittel (15,16) in Anlage gebracht werden.

9. Verfahren nach Anspruch 8, **dadurch gekennzeichnet, dass** durch die außenseitig anliegenden Haltemittel (15.16) die Endabschnitte (7) zur Bildung beziehungsweise zum Schließen der Ringform zueinander geführt werden.

10. Verfahren nach einem der vorangehenden Ansprüche, **gekennzeichnet durch** die Verwendung von den Teigling (1) haltenden Führungsmitteln (12,13) vor und/oder während der des Teigling-Biegens.

11. Verfahren nach Anspruch 10, **dadurch gekennzeichnet, dass** die Führungsmittel zum Einhalten oder Begrenzen einer Biegeebene eingesetzt werden, längs oder innerhalb welcher die beiden Endabschnitte aufeinander zugebogen werden.

12. Vorrichtung zur maschinellen Herstellung ring- oder U-artig gebogener Teigwickel (14) für Croissants aus in sich rundlich gewickelten Teiglingen (1) mit geradliniger Wickel- beziehungsweise Längsachse (3), mit einer die Teiglinge (1) in eine Förderrichtung (2) befördernden Transporteinrichtung, insbesondere Förderband (23), und mit einem oder mehreren, gegenüber je einem der beiden Endabschnitte (7) des Teiglings (1) derart angeordneten Biegemitteln, dass den Endabschnitten (7) zueinander konvergierende Biegebewegungen erteilbar sind, wobei den Biegemitteln eine Nut-Prägeeinrichtung (4,18) vorgeordnet ist, die zum Einprägen von in Förder- oder Umfangsrichtung des Teiglings (1) verlaufenden Rillen oder Biegenuten (5a,5b) in den Teiglingsmantel ausgebildet und zur Bildung eines Teigling-Prägedurchgangs der Transporteinrichtung (23) gegenüberliegend angeordnet ist und ein oder mehrere, in die Förderrichtung (2) drehbare Rillräder (4) aufweist, die im Abstand voneinander angeordnet sind und mit der von ihnen beabstandeten Transporteinrichtung (23) den Prägedurchgang bilden, **dadurch gekennzeichnet, dass** die Rillräder (4) von einem Drehantrieb mit einer Geschwindigkeit derart angetrieben sind, dass sie den Teiglingen (1) eine Drehbewegung um deren Längsachse (3) erteilen.

13. Vorrichtung nach Anspruch 12, **gekennzeichnet durch** wenigstens drei koaxial nebeneinander drehgelagerte Rillräder (4), von denen eines einem mittleren Längsabschnitt (6), und die anderen beiden je einem Endbeziehungsweise Biegeabschnitt (7) des Teiglings (1) zugeordnet sind.

14. Vorrichtung nach einem der vorangehenden Ansprüche, **gekennzeichnet durch** eine erste Führungseinrichtung (12), die der Transporteinrichtung (23) gegenüberliegend zur Bildung eines die Teiglinge (1) an Ober- und Unterseite führenden und begrenzenden Durchgangs angeordnet und ausgebildet ist.

15. Vorrichtung nach Anspruch 14, **dadurch gekennzeichnet, dass** die erste Führungseinrichtung (12) mit einem oder mehreren, in Transportrichtung angetriebenen Endlos-Führungsriemen (13) realisiert ist, die den zu biegenden Endabschnitten (7) des Teiglings (1) zugeordnet sind.

16. Vorrichtung nach Anspruch 15, **dadurch gekennzeichnet, dass** die Führungsriemen (13) jeweils zwischen zwei Rillrädern (4) verlaufend angeordnet sind.

17. Vorrichtung nach einem der vorangehenden Ansprüche, **dadurch gekennzeichnet, dass** das oder die Biegemittel mit maschinell angetriebenen Biege-Bürsten (8) realisiert sind, die mit ihren Borsten (9) für den Eingriff mit den Endabschnitten (7) des von der Transporteinrichtung zugeführten Teiglings (1) angeordnet sind.

18. Vorrichtung nach Anspruch 17 und einem der Ansprüche 15 oder 16, **dadurch gekennzeichnet, dass** der oder die Führungsriemen (13) sich in den Bewegungsbereich der Borsten (9) der Biegebürsten (8) derart erstrecken, dass die Borsten (9) und/oder die davon erfaßten Teiglings-Endabschnitte (7) am jeweiligen Führungsriemen (13) abstreifen beziehungsweise anschlagen.

19. Vorrichtung nach Anspruch 17 oder 18, **dadurch gekennzeichnet, dass** die Borsten (9) mit elastischem Material, insbesondere Kunststoff, hergestellt sind.

20. Vorrichtung nach Anspruch 17, 18 oder 19, **dadurch gekennzeichnet, dass** die Biegebürsten (8) als radartige, drehangetriebene Rotationsbürsten realisiert und derart angeordnet sind, dass ihre Drehachsen (11) schräg (20) oder senkrecht zur Förderrichtung (2) verlaufen.

21. Vorrichtung nach einem der vorangehenden Ansprüche, **gekennzeichnet durch** eine den Biegemitteln nachgeordnete, zweite Führungseinrichtung (15), die zur Bildung eines die Teiglinge (1) an ihren U-förmig umgebogenen End- beziehungsweise Schenkelabschnitten (7) führenden und begrenzenden Seiten-Führungsdurchgangs angeordnet und ausgebildet ist.

22. Vorrichtung nach Anspruch 21, **dadurch gekennzeichnet, dass** die zweite Führungseinrichtung (15) an einer Auflagefläche der Transporteinrichtung (23) hochstehende, gegenüberliegende Seitenführungsbänder (16) aufweist, die in der Förderrichtung (2) angetrieben und zur Anlage an die Außenseiten der umgebogenen End- beziehungsweise Schenkelabschnitte (7) der Teigwickel (14) angeordnet sind.

## Claims

1. Method for mechanically manufacturing a rolled-up dough piece (14), bent like a ring or a U, for croissants from an unshaped dough piece (1), which is rolled roundly in on itself and has a rectilinear rolling or longitudinal axis (3), by bending both end portions (7) of the unshaped dough piece (1) towards one another, wherein the unshaped dough piece (1) is provided at its circumferential surface area or a part thereof, before being bent, with one or more folding and/or bending scores (5a, 5b) and/or grooves extending in its circumferential direction, **characterised in that** the one or more bending scores (5a, 5b) is/are only formed over a sub-portion of the surface area circumference of the unshaped dough piece (1) before the latter is bent, and then the unshaped dough piece (1) is turned about its rolling axis (3) such that the longitudinal openings of the bending scores point in a direction which is remote from or opposite to the converging movement of the end portions (7) and/or an unshaped dough piece conveying direction (3).

2. Method according to Claim 1, **characterised in that**, for bending purposes, the two end portions (7) are each engaged with a mechanically moved bending brush (8) and moved by the latter in the direction of the respective other end portion (7).

3. Method according to Claim 1, **characterised in that** the unshaped dough piece is turned through 90 degrees about its rolling axis (3).

4. Method according to any one of the preceding Claims, **characterised in that** the bending scores (5a, 5b) are formed in a central longitudinal portion of the unshaped dough piece (1) and/or in an end region of the unshaped dough piece (1) which is associated with the bending brushes (8).

5. Method according to any one of the preceding Claims, wherein unshaped dough pieces (1) which are rolled with an oval or elliptical cross section are used, wherein the cross section extends perpendicularly to the longitudinal and/or rolling axis of the unshaped dough piece (1), **characterised in that** the unshaped dough piece (1) is turned before being bent, preferably through 90°, about its longitudinal or rolling axis (3) such that the longer of the two ellipse axes extends transversely to a bending plane which is spanned by the two end portions (7) in consequence of the bending.

6. Method according to Claims 3 and 5, **characterised in that** the bending scores (5a, 5b) are formed in the curved portion of the surface area circumference of the unshaped dough piece, the longer of the two ellipse axes passing approximately centrally though this curved portion.

7. Method according to any one of the preceding Claims, wherein the unshaped dough pieces (1) are transported on a conveyor belt (23) while being bent, **characterised in that** a path speed which is at least twice the transport speed of the conveyor belt (23) is imparted to the bristles (9) of the bending brush(es) (8).

8. Method according to any one of the preceding Claims, **characterised in that** holding means (15, 16) are brought to bear from outside against each of the two U-sides or end portions (7) following bending.

9. Method according to Claim 8, **characterised in that** the end portions (7) are guided towards one another to create or close the ring shape by the externally applied holding means (15, 16).

10. Method according to any one of the preceding Claims, **characterised by** the use of guide means (12, 13), which hold the unshaped dough piece (1), before and/or during bending of the latter.

11. Method according to Claim 10, **characterised in that** the guide means are used to maintain or define a bending plane along or within which the two end portions are bent towards one another.

12. Apparatus for mechanically manufacturing rolled-up dough pieces (14), bent like a ring or a U, for croissants from unshaped dough pieces (1), which are rolled roundly in on themselves and have a rectilinear rolling or longitudinal axis (3), with a transport device, in particular a conveyor belt (23), which conveys the unshaped dough pieces (1) in a conveying direction (2), and with one or more bending means, which is/are disposed opposite each of the two end portions (7) of the unshaped dough piece (1) such that converging bending movements are imparted to the end portions (7), wherein a score imprinting device (4, 18) lies upstream of the bending means, which device is formed to imprint grooves or bending scores (5a, 5b), extending in the conveying or circumferential direction of the unshaped dough piece (1), in the surface area of the unshaped dough piece, is disposed opposite the transport device (23) to create an unshaped dough piece imprinting passage and comprises one or more grooved wheels (4) which can rotate in the conveying direction (2), is/are disposed at a spacing from one another and form(s) with the transport device (23), spaced apart from them, the imprinting passage, **characterised in that** the grooved wheels (4) are driven by a rotary drive at a speed such that they cause the unshaped dough pieces (1) to execute a rotational movement about their longitudinal axis (3).

13. Apparatus according to Claim 12, **characterised by** at least three grooved wheels (4) which are rotatably mounted coaxially side by side, one of which is associated with a central longitudinal portion (6) and the other two of which are both associated with a respective end or bending portion (7) of the unshaped dough piece (1).

14. Apparatus according to any one of the preceding Claims, **characterised by** a first guide device (12) which is disposed and formed opposite the transport device (23) to create a passage which guides and defines the unshaped dough pieces (1) at the top side and underside.

15. Apparatus according to Claim 14, **characterised in that** the first guide device (12) is constructed with one or more continuous guide belt(s) (13) which is/are driven in the transport direction and associated with the end portions (7) of the unshaped dough piece (1) which are to be bent.

16. Apparatus according to Claim 15, **characterised in that** the guide belts (13) are each disposed so as to extend between two grooved wheels (4).

17. Apparatus according to any one of the preceding Claims, **characterised in that** the bending means is or are constructed with mechanically driven bending brushes (8) which are disposed with their bristles (9) for engagement with the end portions (7) of the unshaped dough piece (1) which is fed by the transport device.

18. Apparatus according to Claim 17 and either of Claims 15 and 16, **characterised in that** the guide belt or guide belts (13) extend(s) in the range of movement of the bristles (9) of the bending brushes (8) such that the bristles (9) and/or the end portions (7) of the unshaped dough piece which are taken up by the bristles glance off or strike against the respective guide belt (13).

19. Apparatus according to Claim 17 or 18, **characterised in that** the bristles (9) are manufactured with elastic material, in particular plastics material.

20. Apparatus according to Claim 17, 18 or 19, **characterised in that** the bending brushes (8) are constructed as wheel-like, rotatably driven rotary brushes and are disposed such that their rotational axes (11) extend obliquely (20) or perpendicularly to the conveying direction (2).

21. Apparatus according to any one of the preceding Claims, **characterised by** a second guide device (15) which lies downstream of the bending means and is disposed and formed to create a lateral guide passage which guides and defines the unshaped dough pieces (1) at their end or sides portions (7) bent over in the shape of a U.

22. Apparatus according to Claim 21, **characterised in that** the second guide device (15) comprises opposite lateral guide belts (16) which rise from a bearing surface of the transport device (23), are driven in the conveying direction (2) and disposed to bear against the outer sides of the bent-over end or side portions (7) of the rolled-up dough piece (14).

## Revendications

1. Procédé pour la production mécanique de morceaux de pâte enroulés (14) pliés en forme d'anneau ou de U pour des croissants à partir d'une pâte (1) enroulée en rond sur elle-même avec un axe d'enroulement ou axe longitudinal (3) rectiligne, avec lequel deux sections finales (7) de la pâte (1) sont repliées l'une vers l'autre, moyennant quoi la pâte (1) est pourvue avant son pliage, sur son enveloppe périphérique ou une partie de celle-ci, d'une ou de plusieurs rainures (Sa, 5b) et/ou cannelures de brisure et/ou de pliage, **caractérisé en ce que**, avant le pliage de la pâte (1), une ou plusieurs rainures de pliage (5a, 5b) sont formées seulement sur une section partielle de son enveloppe périphérique, puis la pâte (1) est tournée autour de son axe d'enroulement (3) de telle sorte que les ouvertures longitudinales des rainures de pliage sont dirigées dans une direction, qui est opposée au déplacement des sections finales (7) l'une vers l'autre et/ou d'un sens de transport de la pâte (3).

2. Procédé selon la revendication 1, **caractérisé en ce que**, pour le pliage, les deux sections finales (7) sont mises en prise respectivement avec une brosse de pliage (8) déplacée à la machine et sont déplacées par cette brosse en direction de respectivement l'autre section finale (7).

3. Procédé selon la revendication 1 ou 2, **caractérisé en ce que** la pâte est tournée de 90° autour de son axe d'enroulement (3).

4. Procédé selon l'une quelconque des revendications précédentes, **caractérisé en ce que** les rainures de pliage (Sa, 5b) sont réalisées dans une section longitudinale centrale de la pâte (1) et/ou dans une zone d'extrémité, attribuée aux brosses de pliage (8), de la pâte (1).

5. Procédé selon l'une quelconque des revendications précédentes, mis en oeuvre en utilisant des pâtes (1) enroulées avec une section ovale ou elliptique, la section étant agencée perpendiculairement à l'axe longitudinal et/ou l'axe d'enroulement de la pâte (1), **caractérisé en ce que** la pâte (1) est tournée avant son pliage, de préférence de 90°, autour de son axe longitudinal ou de son axe d'enroulement (3), de telle façon que le plan le plus long des deux axes d'ellipse est disposé transversalement à un plan de pliage, qui est tendu par les deux sections finales (7) dans le cadre du pliage.

6. Procédé selon les revendications 3 et 5, **caractérisé en ce que** les rainures de pliage (Sa, 5b) sont réalisées dans la partie courbe de l'enveloppe périphérique de la pâte, laquelle partie courbe est traversée à peu près au milieu par le plus long des deux axes elliptiques.

7. Procédé selon l'une quelconque des revendications précédentes, les pâtes (1) enroulées étant transportées pendant leur pliage sur une bande transporteuse (23), **caractérisé en ce qu'**aux poils (9) de la (des) brosse(s) de pliage (8) est attribuée une vitesse de déplacement, qui est égale au moins au double de la vitesse de transport de la bande transporteuse (23).

8. Procédé selon l'une quelconque des revendications précédentes, **caractérisé en ce que** des moyens de retenue (15, 16) sont mis en appui après le pliage par l'extérieur sur respectivement l'une des deux branches en U ou sections finales (7).

9. Procédé selon la revendication 8, **caractérisé en ce que**, par des moyens de retenue (15, 16) adjacents au côté extérieur, les sections finales (7) sont guidées l'une vers l'autre pour former ou pour fermer la forme d'anneau.

10. Procédé selon l'une quelconque des revendications précédentes, **caractérisé par** l'utilisation de moyens de guidage (12, 13) maintenant la pâte (1) avant et/ou pendant le pliage de la pâte.

11. Procédé selon la revendication 10, **caractérisé en ce que** les moyens de guidage sont utilisés pour respecter ou délimiter un plan de pliage, le long ou à l'intérieur duquel les deux sections finales sont pliées l'une vers l'autre.

12. Dispositif pour la production mécanique de morceaux de pâte enroulés (14) pliés en forme d'anneau ou de U pour des croissants à partir de pâtes (1) enroulées en rond sur elles-mêmes avec un axe d'enroulement ou longitudinal (3) rectiligne, avec un système de transport acheminant les pâtes (1) dans un sens de transport (2), en particulier une bande transporteuse (23), et avec un ou plusieurs moyens de pliage disposés en face de respectivement l'une des deux sections finales (7) de la pâte (1) de telle sorte qu'on peut attribuer aux sections finales (7) des mouvements de pliage convergents les uns par rapport aux autres, moyennant quoi on dispose en amont des moyens de pliage un dispositif d'incrustation pour rainures (4, 18), qui est conçu pour l'incrustation de cannelures ou de rainures de pliage (Sa, 5b) agencées dans le sens de transport ou le sens périphérique de la pâte (1) dans l'enveloppe de la pâte et est disposé en face du dispositif de transport (23) pour la formation d'une passe d'incrustation de pâte et présente une ou plusieurs roues à gorge (4) pouvant tourner dans le sens de transport (2), qui sont disposées à distance les une des autres et forment la passe d'incrustation avec le système de transport (23) espacé des roues, **caractérisé en ce que** les roues à gorge (4) sont entraînées par une commande de rotation avec une vitesse de telle sorte qu'elles donnent aux pâtes (1) un mouvement de rotation autour de leur axe longitudinal (3).

13. Dispositif selon la revendication 12, **caractérisé par** au moins trois roues à gorge (4) logées de façon rotative sur le même axe les unes à côté des autres, dont l'une est attribuée à une partie longitudinale (6) centrale, et les deux autres respectivement à une section finale ou section de pliage (7) de la pâte (1).

14. Dispositif selon l'une quelconque des revendications précédentes, **caractérisé par** un premier système de guidage (12), qui est disposé et réalisé en face du système de transport (23) pour former un passage guidant et délimitant les pâtes (1) sur le dessus et le dessous.

15. Dispositif selon la revendication 14, **caractérisé en ce que** le premier système de guidage (12) est réalisé avec une ou plusieurs courroies de guidage continues (13) entraînées dans le sens de transport, qui sont attribuées aux sections finales (7) à plier de la pâte (1).

16. Dispositif selon la revendication 15, **caractérisé en ce que** les courroies de guidage (13) sont disposées respectivement entre deux roues à gorge (4).

17. Dispositif selon l'une quelconque des revendications précédentes, **caractérisé en ce que** le ou les moyens de pliage sont réalisés avec des brosses de pliage (8) entraînées de façon mécanique, qui sont disposées avec leurs poils (9) pour l'engrènement avec les sections finales (7) de la pâte amenée par le système de transport.

18. Dispositif selon la revendication 17 et l'une quelconque des revendications 15 ou 16, **caractérisé en ce que** la ou les courroies de guidage (13) s'étendent dans la zone de déplacement des poils (9) des brosses de pliage (8) de telle façon que les poils (9) et/ou les sections finales de pâte (7) prises en compte par ceux-ci raclent ou butent sur la courroie de guidage (13) respective.

19. Dispositif selon la revendication 17 ou 18, **caractérisé en ce que** les brosses (9) sont fabriquées avec du matériau élastique, en particulier du plastique.

20. Dispositif selon la revendication 17, 18 ou 19, **caractérisé en ce que** les brosses de pliage (8) sont réalisées sous la forme de brosses de rotation du type roue et entraînées en rotation et sont disposées de telle façon que leurs axes de rotation (11) sont disposés de façon inclinée (20) ou perpendiculaire au sens de transport (2).

21. Dispositif selon l'une quelconque des revendications précédentes, **caractérisé par** un second système de guidage (15) disposé en aval des moyens de pliage, qui est disposé et réalisé pour former un passage de guidage latéral qui guide et délimite les pâtes (1) sur leurs sections finales ou de branche (7) pliées en forme de U.

22. Dispositif selon la revendication 21, **caractérisé en ce que** le second système de guidage (15) présente sur sa surface d'appui du système de transport (23) des bandes de guidage latérales (16) surélevées et opposées, qui sont entraînées dans le sens de transport (2) et sont disposées en appui sur les côtés extérieurs des sections finales ou de branche (7) repliées des morceaux de pâte enroulés (14).
